# EUROPÄISCHE PATENTSCHRIFT

(11) **EP 1 920 621 B1**
(45) Veröffentlichungstag und Bekanntmachung des Hinweises auf die Patenterteilung: **15.07.2015**
(21) Anmeldenummer: 06778264.9
(22) Anmeldetag: 17.08.2006
(51) Int. Cl.: H04W 64/00

(54) **VERFAHREN UND ANORDNUNG ZUR ORTUNG EINES MOBILEN ENDGERÄTES IN EINER MEHRZELLEN-FUNKANORDNUNG**
METHOD AND ARRANGEMENT FOR LOCATING A MOBILE TERMINAL IN A MULTICELL RADIO ARRANGEMENT
PROCEDE ET DISPOSITIF POUR LOCALISER UN TERMINAL MOBILE DANS UNE CONFIGURATION RADIO A PLUSIEURS CELLULES

(30) Priorität: 31.08.2005 DE 102005041453
(43) Veröffentlichungstag der Anmeldung: 14.05.2008
(73) Patentinhaber: Unify GmbH & Co. KG, 81379 München (DE)
(72) Erfinder: LUERS, Jürgen, 33178 Borchen (DE)
(74) Vertreter: Fritzsche, Thomas
(86) Internationale Anmeldenummer: PCT/EP2006/065409
(87) Internationale Veröffentlichungsnummer: WO 2007/025870

(56) Entgegenhaltungen:
- EP-A1- 1 513 290
- US-A1- 2002 098 852
- US-B1- 6 289 211
- US-B1- 6 839 560

## Beschreibung

Die Erfindung betrifft ein Verfahren zur Ortung eines mobilen Endgerätes in einer Mehrzellen-Funkanordnung gemäß dem Oberbegriff des Patentanspruchs 1 und eine Anordnung zur Ortung eines mobilen Endgerätes gemäß dem Oberbegriff des Patentanspruchs 7.

Es ist eine häufige Anforderung in modernen Kommunikationsumgebungen, einen Benutzer bzw. dessen zugeordnetes Kommunikationsendgerät zu lokalisieren, also dessen Standort zu bestimmen. In leitungsvermittelten Kommunikationsnetzwerken, beispielsweise in "klassischen" Telefonanlagen, ist zumeist einem bestimmten Anschluss (Rufnummer) ein bestimmter Ort fest zugeordnet (beispielsweise eine Anschlussdose, "Anschlusslage" oder eine Raumnummer) und somit das zugehörige Engerät leicht lokalisierbar. Dagegen sind andere - besonders drahtlos betriebene - Endgeräte mobil und daher nicht einem bestimmten Ort dauerhaft zuzuordnen. Insbesondere in Mehrzellen-Funkanordnungen, beispielsweise GSM-Netzen, WLAN-Anordnungen, DECT-Multicell-Anordnungen etc., ist der Standort eines mobilen Endgerätes noch nicht einmal auf den Funkbereich eines Senders (Funk-Basisstation) beschränkt, sondern es kann durch das sog. "Roaming" an einem beliebigen Standort des kompletten Mehrzellen-Funknetzwerkes (Funkanordnung) betrieben werden.

Zur Eingrenzung des Standortes eines solchen mobilen Endgerätes ist es bekannt, über das Netzwerk, an dem die Funkbasisstationen angeschlossen sind ("DS" = "Distribution System") diejenige Funk-Basisstation herauszufinden, der das mobile Endgerät zum fraglichen Zeitpunkt zugeordnet ist. Damit kann der Standort des mobilen Endgerätes zumindest auf den Bereich eingegrenzt werden, der von der betreffenden Funk-Basisstation abgedeckt wird.

Zur genaueren Lokalisierung eines mobilen Endgerätes bieten verschiedene Hersteller (z.B. Aruba - www.arubanetworks.com, Newbury - www.newburynetworks.com) eine Vielzahl von Messstationen an, die rasterförmig über das mögliche Einsatzgebiet des mobilen Endgerätes verteilt sind und die jeweils die Empfangsfeldstärke messen, mit der das gesuchte mobile Endgerät an den verschiedenen Standorten der Messstationen empfangbar ist. Da die Empfangsfeldstärke in der Regel um so geringer wird, je weiter das mobile Endgerät von dem jeweiligen (ortsbekannten) Messpunkt entfernt ist, kann aus mehreren Messwerten verschiedener Messstationen durch eine Art Triangulation der Standort des mobilen Endgerätes errechnet oder zumindest abgeschätzt werden.

Neben der beschriebenen Ortung von mobilen Endgeräten können entsprechende Verfahren auch zur Erfassung von Funkeinrichtungen eingesetzt werden. So ist es beispielsweise bekannt, dass in WLAN-Funknetzen Funk-Basisstationen Kenntnis über benachbarte Funk-Basisstationen desselben oder eines "fremden" Funknetzwerkes erhalten, indem die erfassende Funk-Basisstation für jeden verfügbaren Funkkanal eine Zeitlang in den Empfangsmodus schaltet und somit die sog. "Beacons", sog. Funk-Baken, der benachbarten Funk-Basisstationen erfasst. Die "Beacons" sind dabei periodisch ausgestrahlte Funksignale, anhand derer die jeweilige Funk-Basisstation identifiziert werden kann. Aufgrund der dabei erfassten Empfangsfeldstärke der jeweiligen "Beacons" können naheliegende Funk-Basisstationen erfasst und die Benutzung derer verwendeten Funkkanäle vermieden werden, wodurch sich ein störungsfreier Betrieb ergibt.

Die geschilderten Verfahren sind für die Erfassung bzw. Ortung von mobilen Endgeräten mit Nachteilen verbunden, weil mobile Endgeräte im Gegensatz zu den - stationären - Funk-Basisstationen in der Regel keine periodischen Identifizierungssignale oder sonstigen Übertragungen aussenden, so lange sie nicht aktiv Daten versenden. Zwar lassen sich mobile Endgeräte in vielen Fällen so konfigurieren, dass sie kontinuierlich oder quasi-kontinuierlich solche Funk-Signale aussenden, was aber den Energiebedarf der mobilen Endgeräte beträchtlich erhöht. Weiter sind die zur Ortung von mobilen Endgeräten eingesetzten, separaten Messeinrichtungen (Messstationen) eine Investition, die extra zu diesem Zweck getätigt werden muss.

Die Druckschrift US 6,839,560 B1 Bahl et al. "Using a derived table of signal strength data to locate and track a user in a wireless network" zeigt ein Verfahren und eine Anordnung gemäß dem Oberbegriff des Anspruchs 1 bzw. 7, bei denen mittels der Funk-Basisstationen die jeweilige Empfangsfeldstärke einer Aussendung eines mobilen Endgerätes erfasst wird und wobei die gemessenen Werte mit einer Referenztabelle verglichen werden, so dass anhand der nächstliegenden Tabelleneinträge der Standort des mobilen Endgerätes ermittelt wird.

Die Druckschrift US 2002/0098852 A1 Goren et al. "Methods and apparatus for identifying asset location in communication networks" zeigt ebenfalls ein Verfahren und eine Anordnung zur Ortung mobiler Endgeräte. Dabei werden im Wesentlichen von Zugangsknoten (access points) empfangene Feldstärken eines Senders (z.B. PDA und Mobiltelefon) erfasst, um die Position des Senders durch Triangulation abzuschätzen. Zum Messen der Feldstärke unterbrechen diese Zugangsknoten ihren Betrieb und wechseln auf die Frequenz des Senders, dessen Position ermittelt werden soll.

Es ist also eine Aufgabe der vorliegenden Erfindung, die Ortung von mobilen Endgeräten in Mehrzellen-Funkanordnungen mit einer Vielzahl von Funkkanälen dahingehend zu verbessern, dass der reguläre Betrieb der Funk-Basisstationen möglichst wenig beeinträchtigt wird.

Die Aufgabe wird gelöst durch ein Verfahren gemäß dem Patentanspruch 1 und durch eine Anordnung gemäß dem Patentanspruch 7.

Das zur Lösung der Aufgabe eingesetzte Verfahren sieht dabei vor, dass zur Ortung eines mobilen Endgerätes in einer Mehrzellen-Funkanordnung mit mehreren Funk-Basisstationen die Empfangsfeldstärke zumindest einer Datenübertragung des mobilen Endgerätes an mehreren Messpunkten erfasst wird und zur Auswertung der Messwerte diese an eine zentrale Einrichtung übermittelt und dort zur Bestimmung des Standortes verarbeitet werden. Dabei wird als die Mehrzellen-Funkanordnung ein mehrkanaliges Funk-Datennetzwerk verwendet, beispielsweise ein WLAN-Netzwerk, wobei für die Messpunkte die Funk-Basisstationen verwendet werden. Dabei wird das mobile Endgerät in einen aktiven Zustand überführt und eine Mehrzahl der Funk-Basisstationen wird auf den von dem zu ortenden mobilen Endgerät verwendeten Funkkanal eingestellt. Durch eine Datenübertragung zu dem mobilen Endgerät wird dieses zur Aussendung einer Antwortnachricht angeregt, wonach die durch diese Antwortnachricht messbare Empfangsfeldstärke an den auf den entsprechenden Funkkanal eingestellten Funk-Basisstationen erfasst, an die zentrale Einrichtung übermittelt und dort zur Standortbestimmung des mobilen Endgerätes verwendet wird. Durch dieses Verfahren ist es möglich, auch solche Geräte, also mobile Endgeräte, zu orten, die sich in einem passiven Betrieb ("Stromsparmodus") befinden, wobei zur Erfassung der Empfangsfeldstärken die ohnehin vorhandenen Funk-Basisstationen eingesetzt werden können. Durch die Umschaltung auf den jeweiligen Funkkanal des zu ortenden mobilen Endgerätes kann das mobile Endgerät auch in den Fällen geortet werden, in denen mehrere oder alle Funk-Basisstationen, in deren Empfangsbereich das mobile Endgerät angeordnet ist, unterschiedliche Funkkanäle verwenden. Dadurch wird vermieden, dass zum Zweck der Ortung alle Funk-Basisstationen der Mehrzellen-Funkanordnung dauerhaft auf den gleichen Funkkanal eingestellt werden müssen, was zwar technisch möglich ist, aber zu einem verringerten Datendurchsatz in der Funkanordnung führt.

Die Funk-Basisstationen können somit für die Ortung und die damit zusammenhängende Funkkanalumschaltung in ihrem regulären Betrieb unterbrochen werden. Dabei werden dijenigen der Funk- Basisstationen, die zeitkritische und/oder hoch-priorisierte Datenübertragungen durchführen, von der Umschaltung ihres Funkkanals ausgenommen.

Die Lösung der Aufgabe sieht weiter eine Anordnung zur Ortung eines mobilen Endgerätes vor, mit einer Mehrzellen-Funkanordnung mit mehreren Funk-Basisstationen und mehreren Funkkanälen, wobei die Funk-Basisstationen und das mobile Endgerät jeweils einem der Funkkanäle zugeordnet sind. Dabei sind die Funk-Basisstationen jeweils zur Erfassung einer Empfangsfeldstärke einer von dem mobilen Endgerät ausgesendeten Datenübertragung eingerichtet, und die Funk-Basisstationen sind zur Übermittlung einer Datenübertragung zu den mobilen Endgeräten eingerichtet, wobei das mobile Endgerät zur Aussendung einer Antwort-Datenübertragung ausgestaltet ist. Die Funk-Basisstationen sind zu einer temporären Umschaltung auf den dem mobilen Endgerät zugeordneten Funkkanal eingerichtet, und die Funk-Basisstationen sind zur Übermittlung der jeweils erfassten Empfangsfeldstärke der Antwortnachricht zu einer zentralen Einrichtung eingerichtet. Dabei ist die zentrale Einrichtung zur Bestimmung des Standortes des mobilen Endgerätes anhand der übermittelten Empfangsfeldstärken ausgestaltet. Durch eine solche Anordnung ist es möglich, auch in solchen Mehrzellen-Funkanordnungen ein mobiles Endgerät zu orten, in denen die verschiedenen Funk-Basisstationen unterschiedliche Funkkanäle verwenden. Dabei erübrigt sich die Installation einer Mess-Infrastruktur, indem die Funk-Basisstationen selbst für den Messvorgang verwendet werden.

Dabei ist die zentrale Einrichtung, die die Ortung initiiert, so konfiguriert, dass dijenigen der Funk- Basisstationen, die zeitkritische und/oder hoch-priorisierte Datenübertragungen durchführen, von der Umschaltung ihres Funkkanals ausgenommen werden.

Zur Ortung von mobilen Endgeräten, die sich in einem Ruhezustand befinden (Energiesparmodus), kann das mobile Endgerät beispielsweise aktiviert werden, indem in dem "Beacon" der dem mobilen Endgerät zugeordneten Funk-Basisstation eine für das mobile Endgerät anstehende Datenübertragung angezeigt wird.

Vorteilhafte Ausgestaltungen des erfindungsgemäßen Verfahrens sind durch die abhängigen Patentansprüche 2 bis 6 angegeben. Die dabei beschriebene Merkmale und Vorteile gelten sinngemäß auch für die erfindungsgemäße Anordnung.

Der reguläre Betrieb der Funk-Basisstationen und damit der Mehrzellen-Funkanordnung wird schnellstmöglich wiederhergestellt, wenn die für die Messung auf einen anderen Funkkanal umgeschalteten Funk-Basisstationen nach Durchführung der Messung wieder auf ihren ursprünglichen Funkkanal umgeschaltet (zurückgeschaltet) werden und ggf. für den Messvorgang unterbrochene Datenübertragungen fortsetzen.

In den Fällen, in denen sich das mobile Endgerät vor der Messung (Bestimmung) seines Standortes in einem Ruhezustand ("inaktiv") befindet (z.B. Energiesparmodus), kann dieses leicht aktiviert werden, indem für dieses mobile Endgerät eine Datenübertragung angekündigt wird. Dies geschieht in zweckmäßiger Weise dadurch, dass in dem "Beacon" einer oder mehrere Funk-Basisstationen für diese mobile Endgerät ein entsprechendes Zeichen ("Flag") gesetzt wird. Bei einer periodisch durchgeführten Empfangstätigkeit des mobilen Endgerätes wird das "Beacon" empfangen und ausgewertet, so dass das mobile Endgerät danach in einen Dialog mit der Funk-Basisstation eintritt und somit aktiviert ist. Je nach Konfiguration des mobilen Endgerätes kann es notwendig sein, durch weitere Datenübertragungen, beispielsweise Test-Datenübertragungen o.ä., zu verhindern, dass das mobile Endgerät wieder in einen Ruhezustand zurückfällt und somit nicht zur Aussendung einer Datenübertragung, die zur Ortung verwendet werden kann, bereit ist.

Das Verfahren kann nicht nur zur Ortung mobiler Endgeräte, sondern auch zur Erfassung mobiler Endgeräte eingesetzt werden, d.h., dass mittels des Verfahrens zunächst einmal festgestellt wird, ob und welche mobilen Endgeräte sich im Funkbereich einer oder mehrerer/aller Funk-Basisstationen befinden. Dazu werden entsprechende Testnachrichten, also z.B. Multicast-/Broadcast-Nachrichten, über eine oder mehrere Funk-Basisstationen verschickt, wobei zur lückenlosen Erfassung dies auf allen relevanten Funkkanälen geschieht. Dabei kann die Erfassung und die Ortung entweder in zwei unterschiedlichen "Durchläufen" stattfinden, oder aber auch zusammengefasst mittels einer einzigen Erfassung.

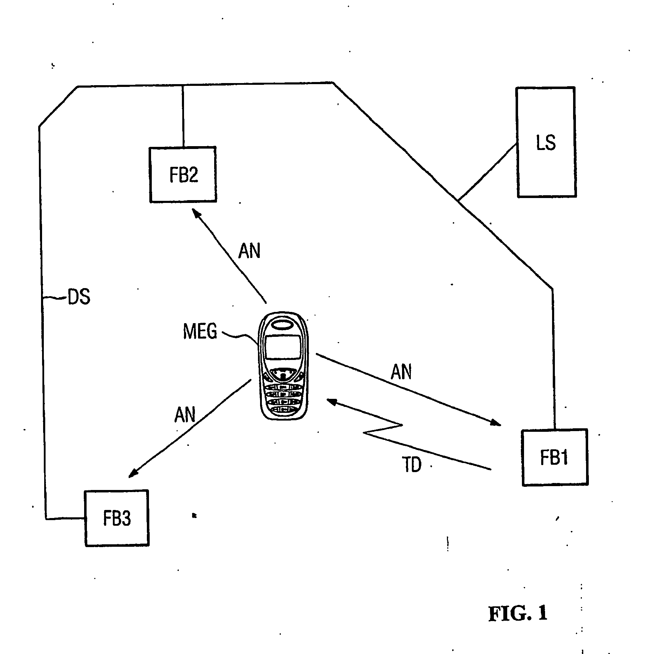

Ausführungsbeispiele des erfindungsgemäßen Verfahrens werden nachfolgend anhand der Zeichnung erläutert. Sie dienen gleichzeitig der Erläuterung einer erfindungsgemäßen Anordnung.

Dabei zeigt die einzige Figur eine Mehrzellen-Funkanordnung mit mehreren Funk-Basisstationen, eine zentrale Einrichtung und ein mobiles Endgerät.

In der Figur ist als Mehrzellen-Funkanordnung ein WLAN-Netzwerk nach dem Standard IEEE802.11 gezeigt. Darin sind die Funk-Basisstationen FB1, FB2, FB3 (sog. Access-Points) und eine zentrale Einrichtung LS ("Location Server") über ein Datennetz DS ("Distribution System"), einem LAN-Netz gemäß des Internet-Protokolls, miteinander verbunden. Außerdem ist in der Figur ein mobiles Endgerät MEG gezeigt, beispielsweise ein sog. PDA ("Personal Digital Assistant") mit WLAN-Sende/Empfangseinrichtung.

Die Funk-Basisstationen FB1, FB2, FB3 sind so ausgestaltet, dass sie von dem zentralen Server LS angewiesen werden können, die Empfangsfeldstärke, mit der ein mobiles Endgerät MEG empfangen wird, an den zentralen Server LS zu melden. Außerdem können die Funk-Basisstationen FB1, FB2, FB3 von dem zentralen Server LS angewiesen werden, temporär auf einen beliebigen Funkkanal des verwendeten WLAN-Standards zu wechseln.

Selbstverständlich kann anstelle des hier betrachteten WLANs des Standards IEEE802.11 auch eine andere Mehrzellen-Funkanordnung mit dazugehörigen mobilen Endgeräten verwendet werden, beispielsweise ein GSM-Netz, ein Mehrzellen-DECT-Netz ("DECT-Multicell"), ein UMTS-Netz o.ä.

Die Funk-Basisstationen FB1, FB2, FB3 senden ein regelmäßiges Signal ("Beacon") aus, mit dessen Hilfe sie identifizierbar sind. In das "Beacon" kann eine Funk-Basisstation FB1, FB2, FB3 eine Meldung einbetten, die einem an der jeweiligen Funk-Basisstation FB1, FB2, FB3 angemeldeten mobilen Endgerät MEG anzeigt, ob eine Datenübertragung mit diesem mobilen Endgerät MEG erforderlich ist.

Das mobile Endgerät MEG kann verschiedene Betriebszustände annehmen, unter anderem einen "aktiven" und einen "inaktiven" Betriebszustand. Im inaktiven Betriebszustand, häufig auch "Power-Save-Mode" genannt, sendet das mobile Endgerät MEG nicht und schaltet auch nur sporadisch seinen Empfänger ein, beispielsweise alle zwei Sekunden für wenige Millisekunden. Während dieser kurzen Empfangsphase überprüft das mobile Endgerät MEG, ob auf dem ihm zugewiesenen Funkkanal das "Beacon" der Funk-Basisstation - hier: die Funk-Basisstation FB1 - empfangbar ist. Ist dies nicht der Fall, geht das mobile Endgerät MEG davon aus, dass die Verbindung zu "seiner" Funk-Basisstation FB1 unterbrochen ist und leitet dementsprechende Maßnahmen, beispielsweise eine Suche nach einer geeigneten anderen Funk-Basisstation FB2, FB3, ein. Ist das "Beacon" jedoch empfangbar, überprüft das mobile Endgerät MEG weiter, ob bei dieser Funk-Basisstation FB1 Daten zum Empfang bereit liegen. Ist dies der Fall, so werden diese Daten von der Funk-Basisstation FB1 angefordert und das mobile Endgerät MEG verbleibt für eine vordefinierte Zeit (Mindest-Zeitspanne) im aktiven Modus, also empfangsbereit. Werden keine bereitliegenden Daten angezeigt, wechselt das mobile Endgerät MEG sofort wieder in den inaktiven Zustand.

Wenn ein (hier nicht dargestellter) Benutzer den Standort des mobilen Endgerätes MEG feststellen möchte, sendet er, beispielsweise über das Datennetz DS, eine entsprechende Abfragemeldung an die zentrale Einrichtung LS. Diese Abfragemeldung umfasst eine Bezeichnung oder eine Adresse, beispielsweise eine IP-Adresse (IP = Internet Protocol), des gesuchten mobilen Endgerätes MEG. Die zentrale Einrichtung LS fragt nun, ebenfalls anhand von Abfragemeldungen über das Datennetz DS, die Funk-Basisstationen FB1, FB2, FB3 dahingehend ab, ob das definierte mobile Endgerät MEG derzeit einer dieser Funk-Basisstationen FB1, FB2, FB3 zugeordnet ist; man sagt dazu auch: bei einer der Funk-Basisstationen FB1, FB2, FB3 "eingebucht" ist. Dabei wird festgestellt, dass das gesuchte mobile Endgerät MEG derzeit mit der Funk-Basisstation FB1 assoziiert ist und das mobile Endgerät MEG und damit auch die Funk-Basisstation FB1 auf einen ersten Funkkanal eingestellt sind. Davon abweichend ist die zweite Funk-Basisstation FB2 auf einen zweiten Funkkanal eingestellt und die Funk-Basisstation FB3 auf einen dritten Funkkanal. Bei dem hier betrachteten Funknetzwerk ist es allerdings auch möglich, mehrere benachbarte Funk-Basisstationen FB1, FB2, FB3, deren Funkbereiche einander überlappen, mit dem gleichen Funkkanal zu betreiben.

Die Funk-Basisstation FB1 erhält nun von der zentralen Einrichtung LS den Befehl, das mobile Endgerät MEG in den aktiven Zustand zu überführen, man sagt auch: dieses "aufzuwecken". Dazu wird im "Beacon" der Funk-Basisstation FB1 ein entsprechendes "Flag" für das mobile Endgerät MEG gesetzt. Außerdem wird in der zentralen Einrichtung LS - alternativ ist es auch in der Funk-Basisstation FB1 möglich - ein Ablaufzähler ("Countdown") gestartet, der periodisch das Aussenden von Testnachrichten ("Ping"-Nachrichten o.ä.) zu dem mobilen Endgerät MEG auslöst. Damit wird das Zurückfallen des mobilen Endgerätes MEG in den inaktiven Zustand vermieden, so lange die für die Ortung notwendigen Messungen noch nicht abgeschlossen sind.

Nun fragt die zentrale Einrichtung LS die Funk-Basisstationen FB1, FB2, FB3 dahingehend ab, ob diese Funk-Basisstationen FB1, FB2, FB3 derzeit hoch-priorisierte Datenübertragungen, beispielsweise Echtzeit-Kommunikationsverbindungen, durchführen. Da dies derzeit nicht der Fall ist (anderenfalls würde die entsprechende Abfrage in periodischen Abständen wiederholt werden), werden die Funk-Basisstationen FB2, FB3 angewiesen, temporär auf den von der Funk-Basisstation FB1 verwendeten ersten Funkkanal zu wechseln. Anschließend werden alle Funk-Basisstationen FB1, FB2, FB3 angewiesen, in einen sog. "Messmodus" umzuschalten, also die Empfangsfeldstärken der Übertragungen der von ihnen empfangenen mobilen Endgeräte MEG zu messen und diese Messergebnisse zwischenzuspeichern. Nun versendet die zentrale Einrichtung LS über das Datennetz DS und die Funk-Basisstation FB1 zu dem mobilen Endgerät MEG eine Nachricht TD ("Test-Daten"), die dieses mobile Endgerät MEG dazu veranlasst, eine Antwortnachricht AN auszusenden. Die Nachricht TD kann beispielsweise aus dem bekannten "Ping-Befehl" bestehen, der auch aus dem Internet bekannt ist und der eine Rückantwort (Antwortnachricht AN) anfordert.

Das zuvor beschriebene "Aufwecken" des mobilen Endgerätes MEG kann auch unterbleiben; in diesem Fall sorgt das Datenpaket der Nachricht TD mit dem "Ping-Befehl" ohnehin dafür, dass das mobile Endgerät MEG in den aktiven Zustand wechselt. Da jedoch das mobile Endgerät MEG im inaktiven Zustand seinen Empfänger nur in relativ großen Zeitabständen einschaltet ("öffnet"), ist in einem solchen Fall unter Umständen die Zeitdauer, während der die Funk-Basisstationen FB2, FB3 auf einen "fremden" Funkkanal wechseln müssen, ebenfalls sehr lang. Dementsprechend kann bei einer großen Anzahl zu ordnender bzw. zu erfassender ("aufzufindender") mobiler Endgeräte MEG bei einem Verzicht auf den Verfahrensschritt des "Aufweckens" die Funktion der Mehrzellen-Funkanordnung erheblich gestört sein.

Durch das Aussenden der Antwortnachricht AN und der Registrierung der resultierenden Empfangsfeldstärken an den Standorten der Funk-Basisstationen FB1, FB2, FB3 ist der eigentliche Messvorgang abgeschlossen, so dass die Funk-Basisstationen FB2, FB3 nun ihren "regulären" Betrieb wieder aufnehmen können und auf ihre ursprünglichen Funkkanäle (zweiter Funkkanal, dritter Funkkanal) zurückschalten können. Die gemessenen Empfangsfeldstärken für das mobile Endgerät MEG werden nun von der zentralen Einrichtung LS bei den Funk-Basisstationen FB1, FB2, FB3 abgefragt (abgerufen) und durch ein an sich bekanntes Triangulationsverfahren in eine Ortsinformation für das gesuchte mobile Endgerät MEG weiterverarbeitet.-Weiter wird der "Messmodus" für die Funk-Basisstationen FB1, FB2, FB3 abgeschaltet.

Durch die beschriebene Steuerung des Messvorgangs durch die zentrale Einrichtung LS können sowohl das mobile Endgerät MEG als auch die Funk-Basisstationen FBI, FB2, FB3 weitgehend standardkonform betrieben werden. Selbstverständlich können jedoch einzelne oder auch alle für eine Ortsbestimmung (Lokalisierung) erforderlichen Vorgänge von einer der Funk-Basisstationen FB1, FB2, FB3 gesteuert werden. Diese Funktionalität kann diesen Funk-Basisstationen bzw. einer der Funk-Basisstationen beispielsweise mittels eines sog. "Firmware-Updates" hinzugefügt werden.

Mittels sog. "Multicast"-Nachrichten oder auch "Broadcast-Nachrichten ist es im Datennetzwerk und somit auch in der betrachteten Mehrzellen-Funkanordnung möglich, mehrere oder alle mobilen Endgeräte MEG eines Funkkanals anzusprechen. Wenn ein solcher Suchvorgang zudem zeitgleich oder sukzessive auf allen Funkkanälen ausgeführt wird, werden somit alle - also auch die bei keiner der Funk-Basisstationen FB1, FB2, FB3 eingebuchten - mobilen Endgeräte MEG aufgefunden. Bei einem solchen "Scan" können ebenfalls mehrere Funk-Basisstationen FB1, FB2, FB3 auf den jeweils gleichen Funkkanal eingestellt und in einen Messmodus umgeschaltet werden, so dass gleichzeitig mit der Erfassung mobiler Endgeräte MEG auch deren Standorte bestimmt und für eine spätere Verwendung gespeichert werden können, beispielsweise in einer Datenbank der zentralen Einrichtung LS.

Alternativ oder ergänzend zu dem gezeigten "RSS"-Verfahren (RSS = Received Signal Strength) ist es denkbar, die Signallaufzeiten zwischen den Funk-Basisstationen FB1, FB2, FB3 und dem mobilen Endgerät MEG auszuwerten. Allerdings sind Signallaufzeiten, insbesondere in den geographisch kleinen WLAN-Funknetzen, nur mit hohem Aufwand in der erforderlichen Präzision (Auflösung) erfassbar. Dem gegenüber umfassen moderne Empfänger bzw. Empfangsmodule ohnehin Schaltkreise, die die Empfangsfeldstärke des jeweils eingestellten Funkkanals erfassen und über eine entsprechende digitale Schnittstelle bereitstellen, so dass eine separate/zusätzliche Messeinrichtung entfallen kann. Mit steigender Anzahl der zur Messung verwendeten Funk-Basisstationen FB1, FB2, FB3 steigt auch die bei der Ortung erreichbare Präzision.

## Patentansprüche

1. Verfahren zur Ortung eines mobilen Endgerätes (MEG) in einer Mehrzellen-Funkanordnung mit mehreren Funk-Basisstationen (FB1, FB2, FB3),
wobei die Empfangsfeldstärke einer Antwortnachricht (AN) des mobilen Endgerätes (MEG) an mehreren Messpunkten erfasst wird, und wobei durch eine Auswertung der Messwerte der Standort des mobilen Endgerätes (MEG) bestimmt wird, wobei
- zur Messung die Funk-Basisstationen (FB1, FB2, FB3) verwendet werden, wobei die Standorte der Funk-Basisstationen (FB1, FB2, FB3) die Messpunkte bilden,
- in einem vierten Schritt von mehreren oder allen Funk-Basisstationen (FB1, FB2, FB3) die Empfangsfeldstärke der empfangenen Antwortnachricht (AN) gemessen und an eine zentrale Einrichtung (LS) übermittelt wird, und
- in einem fünften Schritt durch die zentrale Einrichtung (LS) der Standort des mobilen Endgerätes (MEG) anhand der Messwerte ermittelt wird,
**dadurch gekennzeichnet, dass**
- in einem ersten Schritt das mobile Endgerät (MEG) in einen aktiven Zustand überführt wird,
- in einem zweiten Schritt mehrere oder alle Funk-Basisstationen (FB1, FB2, FB3) auf den von dem zu ortenden mobilen Endgerät (MEG) verwendeten Funkkanal eingestellt werden, und
- in einem dritten Schritt das mobile Endgerät (MEG) durch Übermittlung einer Test-Datenübertragung (TD) zur Aussendung der Antwortnachricht (AN) angeregt wird,
wobei diejenigen der Funk-Basisstationen (FB1, FB2, FB3), die zeitkritische und/oder hoch-priorisierte Datenübertragungen (TD) durchführen, von der Umschaltung ihres Funkkanals ausgenommen werden.

2. Verfahren nach Patentanspruch 1,
**dadurch gekennzeichnet, dass**
nach dem fünften Schritt die Funk-Basisstationen (FB1, FB2, FB3) auf ihren jeweiligen ursprünglichen Funkkanal zurückgeschaltet werden.

3. Verfahren nach einem der vorhergehenden Patentansprüche,
**dadurch gekennzeichnet, dass**
in dem ersten Schritt das mobile Endgerät (MEG) in den aktiven Zustand geführt wird, indem von der mit diesem mobilen Endgerät (MEG) assoziierten Funk-Basisstation (FB1) eine Datenübertragung (TD) für das mobile Endgerät (MEG) angekündigt wird.

4. Verfahren nach einem der vorhergehenden Patentansprüche,
**dadurch gekennzeichnet, dass**
nach dem ersten Schritt das mobile Endgerät (MEG) durch weitere Datenübertragungen so lange im aktiven Zustand gehalten wird, bis der dritte Verfahrensschritt durchgeführt worden ist.

5. Verfahren nach einem der vorhergehenden Patentansprüche,
**dadurch gekennzeichnet, dass**
in dem zweiten Schritt die auf den Funkkanal umzuschaltenden Funkbasisstationen (FB2, FB3) in ihrem regulären Betrieb unterbrochen werden.

6. Verfahren nach einem der vorhergehenden Patentansprüche,
**dadurch gekennzeichnet, dass**
das Verfahren zur Erfassung und/oder Ortung mehrerer oder aller mobilen Endgeräte(MEG) der Mehrzellen-Funkanordnung verwendet wird, indem auf einem oder nacheinander auf mehreren Funkkanälen die dem jeweiligen Funkkanal zugehörenden mobilen Endgeräte (MEG) aktiviert, zur Aussendung einer Datenübertragung (TD) angeregt und die Empfangsfeldstärken dieser Datenübertragung (TD) messtechnisch erfasst werden.

7. Anordnung zur Ortung eines mobilen Endgerätes (MEG), mit einer Mehrzellen-Funkanordnung mit mehreren Funk-Basisstationen (FB1, FB2, FB3) und mehreren Funkkanälen, wobei die Funk-Basisstationen (FB1, FB2, FB3) und das mobile Endgerät (MEG) jeweils einem der Funkkanäle zugeordnet sind, wobei
die Funk-Basisstationen (FB1, FB2, FB3) jeweils zur Erfassung einer Empfangsfeldstärke einer von dem mobilen Endgerät (MEG) ausgesendeten Datenübertragung eingerichtet sind,
zumindest eine der Funk-Basisstationen (FB1) zur Übermittlung einer Datenübertragung (TD) zu dem mobilen Endgerät (MEG) eingerichtet ist,
die Funk-Basisstationen (FB1, FB2, FB3) zur Übermittlung der jeweils erfassten Empfangsfeldstärke einer Antwortnachricht (AN) zu einer zentralen Einrichtung (LS) eingerichtet sind, und
die zentrale Einrichtung (LS) zur Bestimmung des Standortes des mobilen Endgerätes (MEG) anhand der übermittelten Empfangsfeldstärken ausgestaltet ist,
**dadurch gekennzeichnet, dass**
das mobile Endgerät (MEG) zur Aussendung der Antwortnachricht (AN) ausgestaltet ist,
die Funk-Basisstationen (FB2, FB3) zu einer temporären Umschaltung auf den dem mobilen Endgerät (MEG) zugeordneten Funkkanal eingerichtet sind, und
die zentrale Einrichtung (LS) so ausgestaltet ist, dass diejenigen der Funk-Basisstationen (FB1, FB2, FB3), die zeitkritische und/oder hoch-priorisierte Datenübertragungen (TD) durchführen, von der Umschaltung ihres Funkkanals ausgenommen werden.

## Claims

1. A method for locating a mobile terminal (MEG) in a multicell radio arrangement having a plurality of radio base stations (FB1, FB2, FB3),
with the received field strength of a response message (AN) of the mobile terminal (MEG) being recorded at a plurality of measurements points, and with the location of the mobile terminal (MEG) being determined by evaluation of the measured values, whereby
- the radio base stations (FB1, FB2, FB3) are used for measurement, with the locations of the radio base stations (FB1, FB2, FB3) forming the measurement points,
- in a fourth step, a plurality or all of the radio base stations (FB1, FB2, FB3) measure the received field strength of the received response message (AN), and transmit said received field strength to a central device (LS), and
- in a fifth step, the central device (LS) determines the location of the mobile terminal (MEG) by using the measured values,
**characterized in that**
- in a first step, the mobile terminal (MEG) is switched to an active state,
- in a second step, a plurality or all of the radio base stations (FB1, FB2, FB3) are set to the radio channel which is used by the mobile terminal (MEG) to be located, and
- in a third step, the mobile terminal (MEG) is excited to transmit the response message (AN) by transmitting a test data transmission (TD),
whereby those of the radio base stations (FB1, FB2, FB3) which carry out time-critical and/or high-priority data transmissions (TD) are excluded from the switching of their radio channel.

2. The method as claimed in patent claim 1,
**characterized in that**,
after the fifth step, the radio base stations (FB1, FB2, FB3) are switched back to their respective original radio channel.

3. The method as claimed in one of the preceding patent claims,
**characterized in that**,
in the first step, the mobile terminal (MEG) is switched to the active state by the radio base station (FB1) which is associated with this mobile terminal (MEG) notifying a data transmission (TD) for the mobile terminal (MEG).

4. The method as claimed in one of the preceding patent claims,
**characterized in that**,
after the first step, the mobile terminal (MEG) is kept in the active state by further data transmissions until the third method step has been carried out.

5. The method as claimed in one of the preceding patent claims,
**characterized in that**,
in the second step, the radio base stations (FB2, FB3) to be switched to the radio channel have their normal operation interrupted.

6. The method as claimed in one of the preceding patent claims,
**characterized in that**
the method is used for recording and/or locating a plurality or all of the mobile terminals (MEG) in the multicell radio arrangement **in that** the mobile terminals (MEG) which are associated with the respective radio channel are activated on one radio channel or successively on a plurality of radio channels, are excited in order to transmit a data transmission (TD), and the received field strengths of this data transmission (TD) are recorded by measurement.

7. An arrangement for locating a mobile terminal (MEG), using a multicell radio arrangement having a plurality of radio base stations (FB1, FB2, FB3) and a plurality of radio channels, with the radio base stations (FB1, FB2, FB3) and the mobile terminal (MEG) each being associated with one of the radio channels, whereby
the radio base stations (FB1, FB2, FB3) are each designed to record a received field strength of a data transmission which is transmitted from the mobile terminal (MEG),
at least one of the radio base stations (FB1) is designed to transmit a data transmission (TD) to the mobile terminal (MEG),
the radio base stations (FB1, FB2, FB3) are designed to transmit the respectively recorded received field strength of a response message (AN) to a central device (LS), and
in that the central device (LS) is designed to determine the location of the mobile terminal (MEG) on the basis of the transmitted received field strengths,
**characterized in that**
the mobile terminal (MEG) is designed to transmit the response message (AN),
the radio base stations (FB2, FB3) are designed to temporarily switch to the radio channel associated with the mobile terminal (MEG), and
the central device (LS) is designed to exclude those of the radio base stations (FB1, FB2, FB3) which carry out time-critical and/or high-priority data transmissions (TD) from the switching of their radio channel.

## Revendications

1. Procédé de localisation d'un terminal mobile (MEG) dans une configuration radio à plusieurs cellules avec plusieurs stations de base radio (FB1, FB2, FB3), l'intensité de champ à la réception d'un message de réponse (AN) du terminal mobile (MEG) étant détectée à plusieurs points de mesure, et le site du terminal mobile (MEG) étant déterminé par une évaluation des valeurs de mesure,
- les stations de base radio (FB1, FB2, FB3) étant utilisées pour la mesure, les sites des stations de base radio (FB1, FB2, FB3) formant les points de mesure,
- dans une quatrième étape, l'intensité de champ à la réception du message de réponse reçu (AN) étant mesurée par plusieurs ou toutes les stations de base radio (FB1, FB2, FB3) et étant transmise à un dispositif central (LS), et
- dans une cinquième étape, le site du terminal mobile (MEG) étant déterminé par le dispositif central (LS) à l'aide des valeurs de mesure,
**caractérisé en ce que**
- dans une première étape, le terminal mobile (MEG) est transféré dans un état actif,
- dans une deuxième étape, plusieurs ou toutes les stations de base radio (FB1, FB2, FB3) sont réglées sur le canal radio utilisé par le terminal mobile (MEG) à localiser, et
- dans une troisième étape, le terminal mobile (MEG) est excité par transfert d'une transmission de données de test (TD) pour l'émission du message de réponse (AN),
les stations de base radio (FB1, FB2, FB3) qui réalisent des transmissions de données (TD) urgentes et/ou hautement prioritaires étant exemptées de la commutation de leur canal radio.

2. Procédé selon la revendication 1, **caractérisé en ce que**,
après la cinquième étape, les stations de base radio (FB1, FB2, FB3) sont commutées à nouveau sur leur canal radio respectif d'origine.

3. Procédé selon l'une quelconque des revendications précédentes, **caractérisé en ce que**,
dans la première étape, le terminal mobile (MEG) est transféré dans l'état actif **en ce qu'**une transmission de données (TD) pour le terminal mobile (MEG) est annoncée par la station de base radio (FB1) associée à ce terminal mobile (MEG).

4. Procédé selon l'une quelconque des revendications précédentes, **caractérisé en ce que**,
après la première étape, le terminal mobile (MEG) est maintenu par d'autres transmissions de données dans l'état actif jusqu'à ce que la troisième étape de procédé ait été réalisée.

5. Procédé selon l'une quelconque des revendications précédentes, **caractérisé en ce que**,
dans la deuxième étape, le fonctionnement régulier des stations de base radio (FB2, FB3) à commuter sur le canal radio est interrompu.

6. Procédé selon l'une quelconque des revendications précédentes, **caractérisé en ce que**
le procédé est utilisé pour la détection et/ou la localisation de plusieurs ou tous les terminaux mobiles (MEG) de la configuration radio à plusieurs cellules **en ce que** les terminaux mobiles (MEG) appartenant au canal radio respectif sont activés sur un canal radio ou les uns après les autres sur plusieurs canaux radios, sont excités pour l'émission d'une transmission de données (TD) et les intensités de champ à la réception de cette transmission de données (TD) sont détectées par mesure.

7. Configuration de localisation d'un terminal mobile (MEG) avec une configuration radio à plusieurs cellules avec plusieurs stations de base radio (FB1, FB2, FB3) et plusieurs canaux radio, les stations de base radio (FB1, FB2, FB3) et le terminal mobile (MEG) étant associés respectivement à l'un des canaux radios,
les stations de base radio (FB1, FB2, FB3) étant aménagées respectivement pour la détection d'une intensité de champ à la réception d'une transmission de données émise par le terminal mobile (MEG),
au moins l'une des stations de base radio (FB1) étant aménagée pour le transfert d'une transmission de données (TD) au terminal mobile (MEG),
les stations de base radio (FB1, FB2, FB3) étant aménagées pour la transmission de l'intensité de champ à la réception détectée respectivement d'un message de réponse (AN) à un dispositif central (LS), et
le dispositif central (LS) étant configuré pour la détermination du site du terminal mobile (MEG) à l'aide des intensités de champ à la réception transmises,
**caractérisé en ce que**
le terminal mobile (MEG) est configuré pour l'émission du message de réponse (AN),
les stations de base radio (FB2, FB3) sont aménagées pour une commutation temporaire sur le canal radio associé au terminal mobile (MEG), et
le dispositif central (LS) est configuré de sorte que les stations de base radio (FB1, FB2, FB3) qui réalisent des transmissions de données (TD) urgentes et/ou hautement prioritaires soient exemptées de la commutation de leur canal radio.
